# EUROPEAN PATENT APPLICATION

(11) **EP 4 293 814 A1**
(43) Date of publication of application: **20.12.2023**
(21) Application number: 22904642.0
(22) Date of filing: 07.12.2022
(51) Int. Cl.: H01M 50/595, H01M 50/586, H01M 50/533, H01M 50/178, H01M 50/193, H01M 10/058, H01M 10/052

(54) **BATTERY CELL WITH ATYPICAL STICKER TYPE PROTECTIVE TAPE**

(30) Priority: 07.12.2021 KR 20210173368; 06.12.2022 KR 20220168690
(71) Applicant: LG Energy Solution Ltd., 07335 Seoul (KR)
(72) Inventor: LEE, Won Jong, Daejeon 34122 (KR); LI, Dai Hien, Daejeon 34122 (KR); MOON, Tae Young, Daejeon 34122 (KR); KIM, Tae Hyun, Daejeon 34122 (KR)
(74) Representative: Plasseraud IP
(86) International application number: PCT/KR2022/019761
(87) International publication number: WO 2023/106813

(57) **Abstract**

The present disclosure relates to a battery cell for a secondary battery in which an electrode assembly including a cathode, an anode, and a separator interposed between the cathode and the anode is incorporated in a battery case,
wherein the cathode has a cathode tab extending from a cathode current collector formed on one side, and the anode has an anode tab extending from an anode current collector formed on one side,
wherein at the top area of the electrode assembly where the cathode tab and the anode tab protrude, the cathode tab and the anode tab each have a first bent portion and a second bent portion that are bent in a v shape,
wherein a sticker type protective tape is attached to at least one of the first bent portion and the second bent portion, and top areas of the electrode assembly adjacent to the first and second bent portions so as to cover them, and
wherein the sticker type protective tape has an atypical shape.

## Description

### [TECHNICAL FIELD]

### Cross Citation with Related Application(s)

This application claims the benefit of Korean Patent Application No. 10-2021-0173368 filed on December 7, 2021 and Korean Patent Application No. 10-2022-0168690 filed on December 6, 2022 with the Korean Intellectual Property Office, the entire contents of which are incorporated herein by reference.

The present disclosure relates to a battery cell with atypical sticker type protective tape.

### [BACKGROUND]

With the technology development and increased demand for mobile devices, demand for secondary batteries as energy sources has been rapidly increasing. Among such secondary batteries is a lithium secondary battery exhibiting a high energy density and operating voltage, a long cycle lifespan, and a low self-discharge rate, which is now commercialized and widely used.

Moreover, in recent years, the design itself of electronic devices has played a very important role in product selection by consumers, and the electronic devices have been gradually miniaturized and thinned according to the taste of consumer. Thereby, in order to minimize unnecessary waste of internal space of electronic devices, lithium secondary batteries are also required to be miniaturized and thinned, and the demand for them is increasing.

Such a lithium secondary battery is manufactured by fabricating a cathode and an anode, stacking them together with a separator to form an electrode assembly, and incorporating the electrode assembly together with an electrolyte solution in a secondary battery case.

Meanwhile, at this time, a process of attaching a protective tape to the jointing portion between a tab and a lead of the electrode assembly and v-forming the tab is performed. However, such a protective tape is generally attached only to the anode portion, which causes a pressure deviation between the cathode and the anode according to the pressing process of the manufactured electrode assembly, resulting in non-uniform adhesive property. Such non-uniform adhesive property ultimately causes a problem of variations in internal resistance due to cycles of the secondary battery.

Therefore, there is an urgent need to develop a secondary battery technology that can solve these problems.

### [DETAILED DESCRIPTION OF THE INVENTION]

### [Technical Problem]

It is an object of the present disclosure to provide a battery cell that can reduce pressure deviation in the longitudinal direction occurring at the top area of an electrode assembly where a cathode tab and an anode tab are formed, and reduce internal resistance deviation due to non-uniform pressure, thereby improving cell performance.

It is another object of the present disclosure to provide a battery cell that can solve the process problem occurring in such a process by accurately making the adhesion position of the protective tape with free formability, and thus solve the problem of deterioration in sealing property that the protective tap subsequently causes interference with the battery case.

### [Technical Solution]

According to one embodiment of the present disclosure, there is provided a battery cell for a secondary battery in which an electrode assembly including a cathode, an anode, and a separator interposed between the cathode and the anode is incorporated in a battery case,
wherein the cathode has a cathode tab extending from a cathode current collector formed on one side, and the anode has an anode tab extending from an anode current collector formed on one side,
wherein at the top area of the electrode assembly where the cathode tab and the anode tab protrude, the cathode tab and the anode tab each have a first bent portion and a second bent portion that are bent in a v shape,
wherein a sticker type protective tape is attached to at least one of the first bent portion and the second bent portion, and top areas of the electrode assembly adjacent to the first and second bent portions so as to cover them, and
wherein the sticker type protective tape has an atypical shape.

At this time, the sticker type protective tape is a sticker cut into an atypical shape, and may be made of casted polypropylene (CPP).

The sticker type protective tape may be formed so as to include a convex portion having such a shape as to cover at least one of the first bent portion and the second bent portion, and a concave portion whose width is smaller.

Specifically, the convex portion covers a second bent portion in which the anode tab is bent in a v shape, or the convex portion may be formed by two numbers so as to cover both a first bent portion in which the cathode tab is bent in a v shape and a second bent portion in which the anode tab is bent in a v shape.

In one example, when the convex portion covers only the second bent portion, the electrode assembly may be configured such that the outermost electrode in the stacking direction is a cathode, and the cathode active material layer is a single-sided cathode formed only on one surface of the cathode current collector. A thickness of the sticker type protective tape may be 10 *µ*m to 100 *µ*m.

The length of the sticker type protective tape may be a length that can cover the top area of the electrode assembly adjacent to the cathode tab and the anode tab.

Meanwhile, the cathode and the anode each have a flat portion where the active material layer has a constant thickness, and an inclined portion where the thickness of the active material layer in the flat portion gradually decreases,
the inclined portion is formed at an end in a direction in which the cathode tab of the cathode and the anode tab of the anode protrude, and
the top area of the electrode assembly where the sticker type protective tape is formed may be a portion corresponding to the inclined portion.

The cathode tab and the anode tab are jointed to a cathode lead and an anode lead, respectively, and the cathode lead and the anode lead may be jointed to a first bent portion of the cathode tab and a second bent portion of the anode tab.

The cathode lead and the anode lead protrude toward the outside of the battery case, and a sealing member may be formed at a portion where the cathode lead and the anode lead come into contact with the battery case.

At this time, the sealing member may be made of one or more materials selected from the group consisting of polyphenyleneether (PPE), polyimide (PI), polypropylene (PP), polyethyleneterephthalate (PET), polyphenylene sulfide (PPS), and polyethylene (PE).

Meanwhile, the battery cell may be a lithium secondary battery.

### [BRIEF DESCRIPTION OF THE DRAWINGS]

Fig. 1 shows a planar transmission before v-formation of a tab of a battery cell according to one embodiment of the present disclosure;
Fig. 2 shows a planar transmission before v-formation of a tab of a battery cell according to another embodiment of the present disclosure;
Fig. 3 shows a planar transmission after v-formation of a tab in the battery cell of Fig. 2;
Fig. 4 is a cross-sectional view of the battery cell of Fig. 2;
Fig. 5 is schematic views of the sticker type protective tape in Fig. 2;
Fig. 6 is a 3D scan of the electrode assembly of Example 1 according to Experimental Example 1 after cycling;
Fig. 7 is a 3D scan of the electrode assembly of Comparative Example 1 according to Experimental Example 1 after cycling;
Fig. 8 is a photograph of a top area of the electrode assembly of Example 1 according to Experimental Example 2;
Fig. 9 is a photograph of a top area of the electrode assembly of Comparative Example 2 according to Experimental Example 2;
Fig. 10 is a photograph of the pressure paper test results of the top area of the electrode assembly of Example 1 according to Experimental Example 3;
Fig. 11 is a photograph of the pressure paper test results of the top area of the electrode assembly of Comparative Example 1 according to Experimental Example 3; and
Fig. 12 is a comparison graph measuring the magnitude of pressure applied to the top areas of the secondary batteries of Example 1 and Comparative Example 1 according to Experimental Example 4.

### [DETAILED DESCRIPTION OF THE EMBODIMENTS]

The terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the terms and words as terms for describing most appropriately the best method the inventor knows for carrying out the invention. Accordingly, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed, and the scope of the present disclosure is not limited to the embodiments described below.

Hereinafter, the present disclosure will be described in detail with reference to the accompanying drawings. The terms or words used in the present specification and claims should not be construed as being limited to typical meanings or dictionary definitions, and the present disclosure should be construed with meanings and concepts that are consistent with the technical idea of the present disclosure based on the principle that the inventors may appropriately define concepts of the terms to appropriately describe their own disclosure in the best way.

Further, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed.

According to one embodiment of the present disclosure, there is provided a battery cell for a secondary battery in which an electrode assembly including a cathode, an anode, and a separator interposed between the cathode and the anode is incorporated in a battery case,
wherein the cathode has a cathode tab extending from a cathode current collector formed on one side, and the anode has an anode tab extending from an anode current collector formed on one side,
wherein at the top area of the electrode assembly where the cathode tab and the anode tab protrude, the cathode tab and the anode tab each have a first bent portion and a second bent portion that are bent in a v shape,
wherein a sticker type protective tape is attached to at least one of the first bent portion and the second bent portion, and top areas of the electrode assembly adjacent to the first and second bent portions so as to cover them, and
wherein the sticker type protective tape has an atypical shape.

At this time, the sticker type protective tape is a sticker cut into an atypical shape, and may be made of casted polypropylene (CPP).

The protective tape can be used in the form of a cut sticker, which can be used in a form being simply peeled off from a substrate and attached, and thus, it is very simple.

Further, as the protective tape is used in such a sticker type, it is unnecessary to use a mold for cutting the protective tape, thereby capable of solving the problem that sticky substances stick to the mold caused by cutting.

In addition, the material constituting the protective tape is not limited as long as it is an organic material having insulation and adhesiveness, but specifically, it may be casted polypropylene (CPP). The casted polypropylene has excellent heat-sealing properties and excellent chemical resistance. In addition, it is the same as the material of the polymer film of the secondary battery case, which does not cause any side reactions in lithium secondary batteries that use organic solvents as electrolytes and thus, is stable and is suitable for the use of these protective tapes.

Meanwhile, the sticker type protective tape may be formed in an atypical shape.

As described above, when an electrode assembly is mounted in a battery case made of a laminate sheet in a typical pouch-type battery cell, electrode tabs are V-formed and connected to electrode leads to increase a space efficiency of the upper portion. During this process, since a short circuit may occur from the electrode constituting the outermost part due to impacts or drops, and the like, a device capable of protecting them is required.

Thereby, conventionally, a protective tape was attached, but it was manufactured so that the anode was mainly located at the outermost part, so that the protective tape was attached only to the v-forming portion of the anode tab and a part of the top area of the electrode assembly connected thereto.

However, when attached in this way, there was a problem that internal resistance deviation occurs due to non-uniform pressure in the longitudinal direction generated at the top area of the electrode assembly where the cathode tab and the anode tab are formed, thereby deteriorating cell performance.

In this regard, the present inventors confirmed that a protective tape is attached so as to cover the top areas of the electrode assembly adjacent to the first bent portion of the cathode tab and the second bent portion of the anode tab, thereby capable of solving the resistance deviation problem.

However, the inventors confirmed that, when the protective tape is usually cut into a rectangular or square shape and used, it can be attached at a misaligned position when attaching the protective tape, such as being attached obliquely or leaning to one side due to problems of equipment setting or the skill level of workers, whereby when performing subsequent v-formation, interference with the sealing film occurs from a misaligned position or a non-folded and unattached portion occurs, and then the problem of deteriorating the sealing quality of the battery case occurs.

Therefore, the present inventors have conducted in-depth research to solve these problems, and as a result, have found that, when the protective tape is formed in an atypical sticker type, the attachment position of the protective tape is accurately made with free formability, thereby capable of eliminating the problem of deterioration of sealing properties that the protective tape subsequently causes interference with the battery case, and completed the present disclosure.

In order to obtain such an effect most effectively, more specifically, the sticker type protective tape may be formed so as to include a convex portion having such a shape as to cover at least one of the first bent portion and the second bent portion and a concave portion whose width is smaller than the convex portion.

Specifically, the convex portion may be formed by two numbers, so that the anode tab covers the second bent portion bent in a v shape, or the convex portion covers both the first bent portion in which the cathode tab is bent in a v shape and the second bent portion in which the anode tab is bent in a v shape.

In one example, when the convex portion covers only the second bent portion, the electrode assembly may be configured such that the outermost electrode in the stacking direction is a cathode, and the cathode active material layer is a single-sided cathode formed on only one surface of the cathode current collector.

In another example, when the convex portion covers both the first bent portion and the second bent portion, the electrode assembly may be configured such that the outermost electrode in the stacking direction is the anode, the anode active material layer is a single-sided anode formed on only one surface of the anode current collector, the outermost electrode is a single-sided anode as described above, and the outermost electrode is a double-sided anode or a double-sided cathode in which active material layers are formed on both surfaces of the current collector, but are not limited thereto.

The reason why the sticker type protective tape must cover the anode tab as described above is because corrosion of the battery case may occur in the case of contacting the metal of the battery case since the metal used as the anode tab has high reducibility. Meanwhile, when the cathode tab is covered together, it is possible to prevent damage to the polymer layer of the battery case, which is thus more preferable.

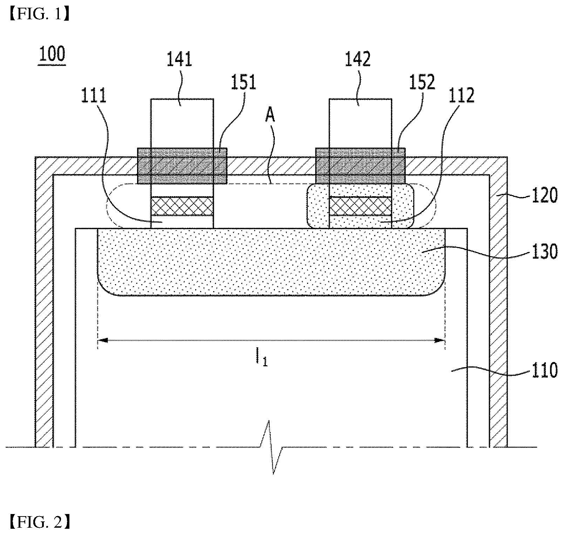

This configuration is shown in Figs. 1 to 5 below, and will be described in more detail with reference to the figures below.

First, Fig. 1 shows a planar transmission before v-formation of a tab of a battery cell according to one embodiment of the present disclosure.

First, referring to Fig. 1, the battery cell 100 according to one embodiment of the present invention consists of a structure in which the electrode assembly 110 is incorporated in the battery case 120, the cathode tab 111 and the anode tab 112 are extendedly protruded in parallel on one side so as not to overlap each other from the cathode current collector and the anode current collector of the electrode assembly 110, and the cathode tab 111 and the anode tab 112 are jointed to the cathode lead 141 and the anode lead 142 protruding toward the outside of the battery case 120, respectively. In addition, the sealing members 151 and 152 are formed at portions where the cathode lead 141 and the anode lead 142 contact the battery case 120.

Meanwhile, since the portion where the cathode tab 111 and the anode tab 112 are jointed to the cathode lead 141 and the anode lead 142 is subjected to a v formation of being bent in a v shape, this forms a first bent portion and a second bent portion. Therefore, in the battery cell 100 of Fig. 1, the first bent portion and the second bent portion are indicated as A as a whole.

In addition, the battery cell 100 according to one embodiment of the present disclosure is configured such that the sticker type protective tape 130 is attached to the second bent portion and the top area of the electrode assembly 110 adjacent to the region A of the first bent portion and the second bent portion so as to cover them.

Therefore, such a sticker type protective tape 130 comprises a convex portion having a convex shape toward the second bent portion so as to cover the second bent portion, and a concave portion having a smaller width than the convex portion so as to entirely wrap only the top area of the electrode assembly 110 from the top area of the electrode assembly 110. That is, the convex portion may have a width in a form of covering the entire second bent portion, and the concave portion may have a width enough to cover only the top area of the electrode assembly 110.

Further, in order to reduce the pressure deviation at the top area of the electrode assembly, the length of the sticker type protective tape 130 is formed to a length 11 capable of covering the top area of the electrode assembly 110 adjacent to the cathode tab 111 and the anode tab 112.

In this case, the outermost electrode of the electrode assembly 110 is not limited, but specifically, the cathode active material layer may be a single-sided cathode formed on only one surface of the cathode current collector. At this time, the cathode active material layer is formed only in a portion facing the inner anode.

A specific shape of the sticker type protective tape 130 will be described in more detail below.

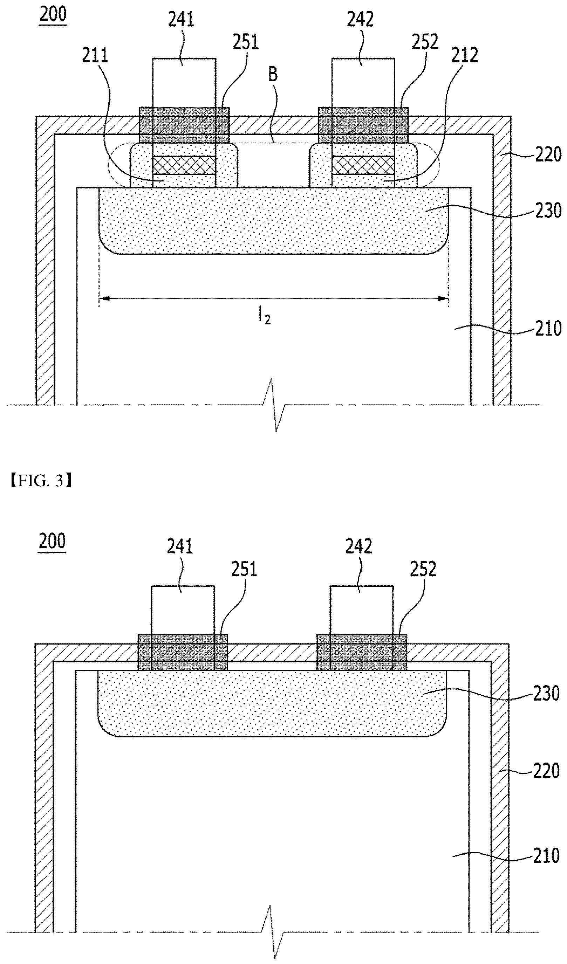

In order to explain the present disclosure in more detail, Fig. 2 shows a planar transmittance before v formation of a tab of a battery cell according to another embodiment of the present disclosure, and Fig. 3 shows planar transmittance after v-formation of the tab in the battery cell of Fig. 2.

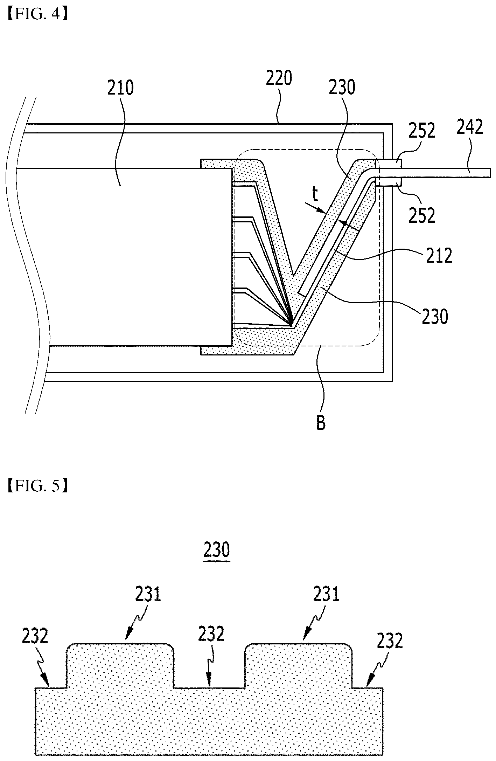

Additionally, in order to more specifically describe the bent portion where the v-formation is performed, Fig. 4 shows a cross-sectional view of the battery cell of Fig. 2, and Fig. 5 is a schematic diagram of a sticker type protective tape for more specifically explaining the shape of the sticker type protective tape. The difference between Fig. 1 and Fig. 2 is only in the shape of the sticker type protective tape, and the contents described below are also applied to Fig. 1.

Referring to Figs. 2 to 4, the battery cell 200 consists of a structure in which, similarly to the battery cell 100, the electrode assembly 210 is incorporated in the battery case 220, the cathode tab 211 and the anode tab 212 are extendedly protruded in parallel on one side from the cathode current collector and the anode current collector of the electrode assembly 210 so as not to overlap each other, and the cathode tab 211 and the anode tab 212 are jointed to the cathode lead 241 and the anode lead 242, respectively.

Here, the cathode tab 211 and the anode tab 212 each have a first bent portion and a second bent portion that are bent in a v shape by a v forming process. This region is denoted as B.

In this area (B), the cathode lead 241 and the anode lead 242 are jointed to the cathode tab 211 and the anode tab 212, respectively, the cathode lead 241 and the anode lead 242 each protrude toward the outside of the battery case 220, and the sealing members 251 and 252 are formed at portions in contact with the battery case 220.

The sealing member is not limited as long as it is a material capable of enhancing adhesion to the battery case and improving sealing properties. For example, the insulating tape may be made of one or more materials selected from the group consisting of polyphenyleneether (PPE), polyimide (PI), polypropylene (PP), polyethyleneterephthalate (PET), polyphenylene sulfide (PPS), and polyethylene (PE).

Meanwhile, the battery cell 200 according to one embodiment of the present disclosure is configured such that at the first bent portion and the second bent portion in the region (B) of the first bent portion and the second bent portion, and at the top area of the electrode assembly 210 adjacent to the region B of the first bent portion and the second bent portion, a sticker type protective tape 230 is attached to both sides so as to cover them.

Referring to Figs. 2 and 5 together, the sticker type protective tape 230 is formed to have two convex portions 231 in a form of covering the first bent portion and the second bent portion and a concave portion 232 having a smaller width than the convex portion 231 formed so as to cover only the top area of the electrode assembly 210.

Here, the outermost electrode of the electrode assembly 110 is not limited, and a single-sided cathode, a single-sided anode, a double-sided cathode, and a double-sided anode may all be positioned. At this time, the convex portion 231 may have a width in a form of covering both the first bent portion and the second bent portion in the region B of the first bent portion and the second bent portion, and the concave portion 232 may have a width enough to cover only the top area of the electrode assembly 210.

Therefore, the attachment position of the sticker type protective tape 230 can be accurately made so as to correspond to the shape, and the convex portion of the sticker type protective tape 230 is formed only on the tab-formed portion. Therefore, as shown in Fig. 3, in a state where the electrode tabs are bent after the v-forming process, the possibility that the sticker type protective tape 230 located at the top area of the electrode assembly 210 is interposed in the sealing portion of the battery case 220 is significantly decreased, which can eliminate the problem of deterioration of sealing properties due to interference with the sealing part, thereby capable of improving safety and cell performance.

Meanwhile, although not shown in the figures, the cathode and the anode each have a flat portion where the active material layer has a constant thickness and an inclined portion where the thickness of the active material layer in the flat portion gradually decreases, and the inclined portion is formed at an end in a direction in which the cathode tab 211 and the anode tab 212 protrude. At this time, the top area of the electrode assembly 210 where the sticker type protective tape 230 is formed may be a portion corresponding to the inclined portion of these electrodes.

In this case, a separate protective tape 230 is formed on the top area of the electrode assembly 210 corresponding to the inclined portion of the electrode, whereby when a lamination process or the like is subsequently performed, the protective tape 230 may cover the thickness difference between the flat portion and the inclined portion, and thus, a portion corresponding to the inclined portion of the electrode can also receive the same pressure, which is thus preferable.

Meanwhile, conventionally, the protective tape is formed only on one side of the anode tab. Thus, in order to reduce the pressure difference between the top area of the electrode assembly adjacent to the positive tab and the top area of the electrode assembly adjacent to the anode tab, the length of the sticker type protective tape 230 according to the present disclosure is formed to a length l₂ that can cover the top area of the electrode assembly 210 adjacent to the cathode electrode tab 211 and the anode tab 212, similarly to those shown in Fig. 1.

Therefore, according to the present disclosure, the pressure deviation in the longitudinal direction of the top area of the electrode assembly is reduced, whereby the internal resistance deviation is also reduced, so that further improved cell performance can be obtained.

Furthermore, the thickness (t) of the sticker type protective tape 230 may be 10 *µ*m to 100 *µ*m, specifically 20 *µ*m to 50 *µ*m, within a range that does not increase the volume of the battery cell 200. At this time, the thickness of the sticker type protective tape 230 on both sides may be different from each other or equal to each other.

If the thickness is too thin outside the above range, the effect of the protective tape cannot be exhibited, and if the thickness is too thick, it may increase the thickness and volume of the battery cell, which is thus not preferable.

Other components other than the sticker type protective tape, specific manufacturing methods of cathodes, anodes, separators, battery cases, and the like, and constituent materials are well known in the art, and therefore, descriptions thereof are omitted herein.

Meanwhile, the battery cell according to the present disclosure may be specifically a lithium secondary battery.

Other components of the lithium secondary battery are well known in the art, and therefore, descriptions thereof are omitted herein.

### <Example 1>

LiCoO₂ as a cathode active material, carbon black as a conductive material and PVDF as a binder were mixed at a weight ratio of 97: 1:2 in N-methylpyrrolidone solvent to prepare a slurry for a cathode active material layer. Using a slot die, the slurry for the cathode active material layer was coated onto one surface of an aluminum (Al) thin film, which is a cathode current collector having a thickness of 10 *µ*m, and dried under vacuum at 130°C for 1 hour to form an active material layer. The active material layer thus formed was rolled by a roll pressing method so that the porosity of the flat portion of the active material layer was 20%, to fabricate a cathode having an active material layer with a thickness of 90 *µ*m.

Artificial graphite as an anode active material, a binder (mixture of SBR and CMC in a weight ratio of 2:1), and carbon black as a conductive material were mixed at a weight ratio of 96:2:2, and the resulting mixture and water as a dispersion medium were used to prepare a slurry for an active material layer in which the mixture and the dispersion medium were at a weight ratio of 1:2. Using a slot die, the slurry for the active material layer was coated onto one surface of a copper (Cu) thin film which is an anode current collector with a thickness of 10 *µ*m, and dried under vacuum at 130°C for 1 hour to form an active material layer. The active material layer thus formed was rolled by a roll pressing method so that the porosity of the flat portion of the active material layer was 24%, to fabricate an anode having an active material layer with a thickness of 120 *µ*m.

A porous polyethylene separator was interposed between the cathodes and the anode fabricated as above to manufacture an electrode assembly, and a sticker type protective tape as shown in Fig. 2 was attached to both sides so as to cover the top area of the electrode assembly and the bent portion of the tab to manufacture an electrode assembly. Then, a sealing member was attached to the lead portion in contact with the battery case, positioned inside a battery case, and then electrolyte solution was injected into the inside of the case.

After injecting the electrolyte solution, the lithium secondary battery was activated using a pressure of 1.2Mpa (charged at 0.2C, SOC 5%, and then charged at 2.0C, SOC 65%), and a degassing step was performed to manufacture a final lithium secondary battery.

### <Comparative Example 1>

A lithium secondary battery was manufactured in the same manner as in Example 1, except that in Example 1, a protective tape was attached so as to cover only the bent portion of the anode tab of the manufactured electrode assembly and the top area of the electrode assembly adjacent thereto.

### <Comparative Example 2>

A lithium secondary battery was manufactured in the same manner as in Example 1, except that in Example 1, a rectangular protective tape was attached so as to cover only the bent portion of the cathode tab, the bent portion of the anode tab of the manufactured electrode assembly and the top area of the electrode assembly adjacent thereto.

### <Experimental Example 1>

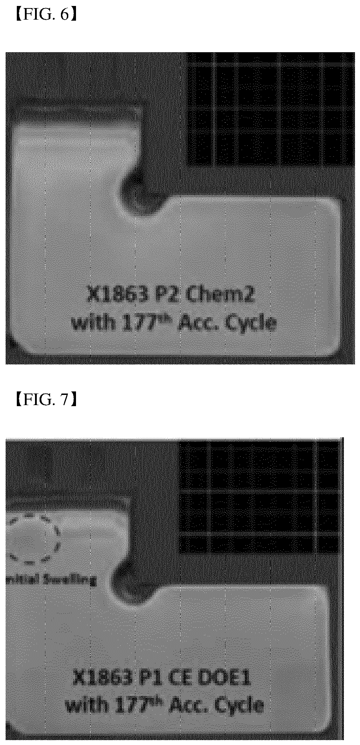

The lithium secondary batteries manufactured in Example 1 and Comparative Example 1 were charged and discharged 177 times at 0.5C in the range of 4.47V to 3.2V at 45°C, and then taken out at SOC 100%, and cooled at room temperature for 4 hours. The results of measuring the 3D scan are shown in Figs. 6 and 7 .

Referring to Figs. 6 and 7, in the lithium secondary battery manufactured in Comparative Example 1, since the pressure at the top area was non-uniform, a side reaction occurred in the portion below the cathode in a charge-discharge process of the battery, and it can be confirmed that a non-uniform surface state appeared on the 3D scan.

### <Experimental Example 2>

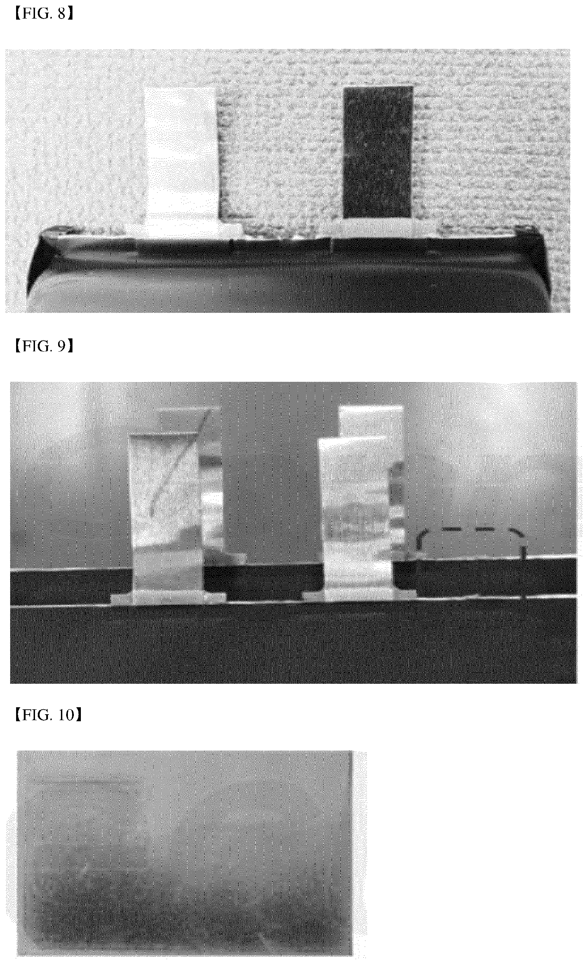

Photographs of the top areas of the lithium secondary batteries manufactured in Example 1 and Comparative Example 2 were taken and shown in Figs. 8 and 9 below.

Referring to Figs. 8 and 9, it can be confirmed that sealing interference occurred in the lithium secondary battery manufactured in Comparative Example 2.

### <Experimental Example 3>

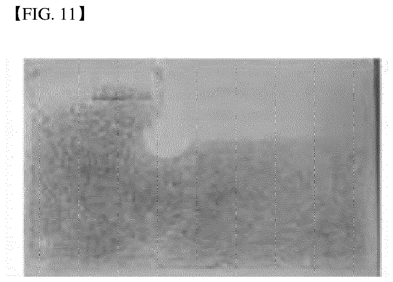

The pressure paper of the top area of the electrode assembly manufactured in Example 1 and Comparative Example 1 was taken, and the results were shown in Figs. 10 and 11 below.

The pressure paper was sandwiched between the pressure injection device and the electrode assembly during the manufacture of the electrode assembly, and then the pressure measured at each location was sensed, thereby visually confirming pressure uniformity.

Referring to Figs. 10 and 11, it can be confirmed that almost no pressure acts on the top area of the lithium secondary battery manufactured in Comparative Example 1 to which the protective tape was not attached. On the other hand, it can be confirmed that a sufficient pressure acts on the top area of the lithium secondary battery manufactured according to Example 1.

### <Experimental Example 4>

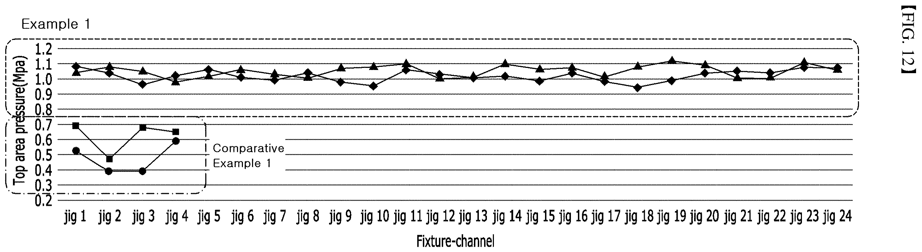

The jig pressure applied to the top area of the lithium secondary battery manufactured in Example 1 and Comparative Example 1 was measured, and the results are shown in Fig. 12 below.

The jig pressure was measured with a digital pressure sensor.

The digital pressure sensor was positioned between the jig that pressurized in the activation process in Example 1 and Comparative Example 1 and the secondary battery. When the pressure of the jig reached the target numerical value, the pressure was graphed by reading the information of the actual pressure applied to the secondary battery.

Referring to Fig. 12, it can be confirmed that almost no pressure acts on the top area of the lithium secondary battery manufactured in Comparative Example 1 to which the protective tape is not attached. On the other hand, it can be confirmed that a sufficient pressure acts on the top area of the lithium secondary battery manufactured according to Example 1, and the overall pressure distribution appeared uniform.

Although the exemplary embodiments of the present disclosure have been disclosed for illustrative purposes, those skilled in the art will appreciate that various modifications, additions and substitutions are possible, without departing from the scope and spirit of the invention as disclosed in the accompanying claims.

### [Industrial Applicability]

The battery cell according to the present disclosure is configured such that the sticker type protective tape is formed in a shape of covering both the bent portions of the cathode tab and the anode tab, so that the pressure deviation in the longitudinal direction generated at the top area of the electrode assembly where the cathode tab and the anode tab are formed can be reduced, and the internal resistance deviation due to non-uniform pressure can be reduced, thereby improving cell performance.

In addition, the protective tape is formed into a cut sticker type, and the attachment position of the protective tape is accurately made with free formability, thereby capable of eliminating the problem of deterioration of sealing properties that the protective tape subsequently causes interference with the battery case, and improving safety and cell performance.

Furthermore, by using the already cut sticker type protective tape, it is effective in preventing the deterioration of the life of the mold due to the adhesive layer that appears when the tape is cut using a conventional mold.

## Claims

1. A battery cell for a secondary battery in which an electrode assembly including a cathode, an anode, and a separator interposed between the cathode and the anode is incorporated in a battery case,
wherein the cathode has a cathode tab extending from a cathode current collector formed on one side, and the anode has an anode tab extending from an anode current collector formed on one side,
wherein at the top area of the electrode assembly where the cathode tab and the anode tab protrude, the cathode tab and the anode tab each have a first bent portion and a second bent portion that are bent in a v shape,
wherein a sticker type protective tape is attached to at least one of the first bent portion and the second bent portion, and top areas of the electrode assembly adjacent to the first and second bent portions so as to cover them, and
wherein the sticker type protective tape has an atypical shape.

2. The battery cell according to claim 1, wherein:
the sticker type protective tape is a sticker cut into an atypical shape, and is made of casted polypropylene (CPP).

3. The battery cell according to claim 1, wherein:
the sticker type protective tape is formed so as to include a convex portion having such a shape as to cover at least one of the first bent portion and the second bent portion, and a concave portion whose width is smaller than the convex portion.

4. The battery cell according to claim 3, wherein:
the convex portion covers a second bent portion in which the anode tab is bent in a v shape, and the electrode assembly is configured such that the outermost electrode in the stacking direction is a cathode, and the cathode active material layer is a single-sided cathode formed only on one surface of the cathode current collector.

5. The battery cell according to claim 3, wherein:
the convex portion is formed by two numbers so as to cover both a first bent portion in which the cathode tab is bent in a v shape and a second bent portion in which the anode tab is bent in a v shape.

6. The battery cell according to claim 1, wherein:
a thickness of the sticker type protective tape is 10 *µ*m to 100 *µ*m.

7. The battery cell according to claim 1, wherein:
a length of the sticker type protective tape is a length that can cover the top area of the electrode assembly adjacent to the cathode tab and the anode tab.

8. The battery cell according to claim 1, wherein:
the cathode and the anode each have a flat portion where the active material layer has a constant thickness, and an inclined portion where the thickness of the active material layer in the flat portion gradually decreases,
the inclined portion is formed at an end in a direction in which the cathode tab of the cathode and the anode tab of the anode protrude, and
the top area of the electrode assembly where the sticker type protective tape is formed is a portion corresponding to the inclined portion.

9. The battery cell according to claim 1, wherein:
the cathode tab and the anode tab are jointed to a cathode lead and an anode lead, respectively, and the cathode lead and the anode lead are jointed to a first bent portion of the cathode tab and a second bent portion of the anode tab.

10. The battery cell according to claim 1, wherein:
the cathode lead and the anode lead protrude toward the outside of the battery case, and a sealing member is formed at a portion where the cathode lead and the anode lead come into contact with the battery case.

11. The battery cell according to claim 10, wherein:
the sealing member is made of one or more materials selected from the group consisting of polyphenyleneether (PPE), polyimide (PI), polypropylene (PP), polyethyleneterephthalate (PET), polyphenylene sulfide (PPS), and polyethylene (PE).

12. The battery cell according to claim 1, wherein:
the battery cell is a lithium secondary battery.
